Europäisches Patentamt

European Patent Office

Office européen des brevets

(11) Publication number: **0 196 600 B1**

## EUROPEAN PATENT SPECIFICATION

(45) Date of publication of patent specification: **22.01.92**

(51) Int. Cl.[5]: **C04B 35/00**, C04B 35/64, C04B 35/58

(21) Application number: **86104076.4**

(22) Date of filing: **25.03.86**

(54) Method for fabricating of large cross section injection molded ceramic shapes.

(30) Priority: **26.03.85 US 716274**
**26.03.85 US 716080**

(43) Date of publication of application:
**08.10.86 Bulletin 86/41**

(45) Publication of the grant of the patent:
**22.01.92 Bulletin 92/04**

(84) Designated Contracting States:
**BE DE FR GB SE**

(56) References cited:
**EP-A- 0 113 846**
**EP-A- 0 117 721**
**DE-A- 2 633 309**
**DE-A- 2 930 211**
**JP-A-60 051 655**

**CHEMICAL ABSTRACTS, vol. 99, no. 18, 1983, page 302, abstract no. 144936b, Columbus, Ohio, US; & JP-A-58 95 640 (TOSHIBA CORP.) 07-06-1983**

(73) Proprietor: **GTE Laboratories Incorporated**
**100 W. 10th Street**
**Wilmington Delaware(US)**

(72) Inventor: **Bandyopadhyay, Gautam**
**3 Grist Mill Road**
**Acton, MA 01720(US)**
Inventor: **French, Kenneth W.**
**64 Island Drive**
**Merrimack, NH 03054(US)**
Inventor: **Bowen, Leslie J.**
**80 Adams Road**
**Concord, MA 01742(US)**
Inventor: **Neil, Jeffrey T.**
**22 Hyacinth Drive**
**E. Pepperell, MA 01437(US)**

(74) Representative: **Patentanwälte Grünecker, Kinkeldey, Stockmair & Partner**
**Maximilianstrasse 58**
**W-8000 München 22(DE)**

EP 0 196 600 B1

**Description**

This invention relates to a method of fabricating an externally crack free injection molded ceramic article of the type as indicated in the pre characterising portion of claim 1. A method of this type is disclosed in Chemical Abstracts, volume 99 (1983, page 302, no 144936b).

This publication discloses a method of making ceramic articles, said method comprises injection molding of a blend of ceramic powder and a binder so as to form a green body, embedding said body in a setter powder, decreasing the body through heating at a rate of 5% celsius per hour and buring and sintering the decreased body so as to obtain a defect-free silicon nitride ceramic article. The binder composition is merely 20 volume percent of the injection molding formulation.

Furthermore there is known from DE-A-26 33 309 a method of making a green body by injection molding a blend of ceramic powder and a wax, embedding the thus obtained body in a powder which absorbs the binder material and dewaxing the body so that at least 45 weight percent of the wax is removed before the body reached the vaporisation temperature of the wax.

Injection molding of ceramics has been described by several authors in the open literature (e.g. T.J. Whalen et al., Ceramics for High Performance Application-II, Ed. J.J. Burke, E.N. Lenoe, and R.N. Katz, Brook Hill Publishing Co. 1978, pp. 179-189, J.A. Mangels, Ceramics for High Performance Application-II, pp. 113-129, G.D. Schnittgrund, SAMPE Quarterly, p. 8-12, July 1981, etc.) and in patent literature (e.g. M.A. Strivens, U.S. Patent No. 2939199, 1960, I.A. Crossley et al., U.S. Patent No. 3882210, 1975, R.W. Ohnsorg, U.S. Patent No. 4144207, 1979, etc.). Several papers have also been published by GTE authors (e.g. C.L. Quackenbush et al., Contractors Coordination Meeting Proceedings, 1981, G. Bandyopadhyay et al., Contractors Coordination Meeting Proceedings, 1983). The general process routing for injection molding is well known. It includes a) compounding which involves mixing the high surface area ceramic with molten organic binder, b) injection molding by which the powder/binder mix is formed into a given shape in a metallic mold, c) binder removal which must be accomplished without disrupting the ceramic structure, and d) consolidation of the part by sintering and/or by hot isostatic pressing. Significant effort has been made by various researchers to determine the effects of starting powder particle size and size distribution on moldability of powder, and to identify binder systems that allow easy compounding, molding and binder burnout (without disruption) from the part. Although volumes of patent literature now exist on powder requirements, different binder concepts and binder removal processes, it is generally recognized that injection molding and binder removal from a large, complex cross section part (e.g. rotors for turbine engines) poses a very difficult task because of internal and external cracking during burnout. An extensive evaluation of the patent literature reveals that in most cases only small cross section (less than 1.00cm) parts were considered as examples, or that the cross sections and complexities were not revealed. None of these references described fabrication of large, complex cross section silicon nitride parts, specifically fabricated by injection molding and sintering. GTE Laboratories has developed a process routing which is highly successful for fabrication of good quality small cross section injection molded and sintered parts, such as turbine blades and vanes, in large quantities. Since this development, improvements in binder composition (K. French et al., U.S. Patent No. 4,456,713) allowed further simplification of molding and binder removal procedures. This process routing however, failed to produce an externally crack-free injection molded ceramic article having a large cross section one centimeter or greater (e.g. turbine rotor and turbocharger sized test parts). It has been established that the use of a submicron starting powder, such as silicon nitride containing $Y_2O_3$ and $Al_2O_3$, and a binder results in certain fundamental difficulties which causes external and internal cracking in large cross section parts.

Accordingly, it is an object of the present invention to Provide a new and improved method of injection molding, binder removal and densifying a ceramic article having a large cross section which is crack-free. A process routing capable of making large, complex cross section parts can always be used for fabrication of small parts. The reverse may not always be true.

This object is achieved by the method as defined in claim 1.

The inventive method can also be used for fabrication of small parts having cross sections less than one cm.

Preferred embodiments and further improvements of the method according to the invention are indicated in the sub claims.

The cause of cracks in an injection molded ceramic article appears to be due to capillarity-driven migration of liquid binder from the interior of the molded part to its surface.

It has been established that the use of a submicron starting powder (such as processed silicon nitride containing $Y_2O_3$ and $Al_2O_3$) and a wax based binder (both of which are used for small cross section parts) resulted in certain fundamental difficulties which caused external and internal cracking in large cross section parts. The cracking problem increased with increasing part size and part complexity. The fundamental difficulties arise due to migration of liquid binder driven by capillary action from the interior of the part to its surface. The liquid binder often carries fine submicron silicon nitride particles from the bulk to the surface causing a density gradient, shrinkage gradient and cracking. In addition to fine particle migration, the capillary forces exert an outward drag on all particles causing them to start compaction at the part surface. As a result, the surface becomes rigid and prevents part shrinkage. Thus as the binder loss continues, the interior shrinks away from the rigid surface region causing the formation of cracks. If a region of the surface becomes hard before another region (e.g. thick vs. thin section, or top vs. bottom section) external cracks form. This understanding of binder loss and cracking mechanisms is the basis for the present invention.

The concepts pursued in this invention are as follows:

o Reduce the amount of fine particles (less than one micron silicon nitride particles) or eliminate fine particles from the starting powder to reduce or eliminate their preferential migration to the surface.

o Increase the particle size of the starting powder to reduce the capillary forces which, in turn, reduce the outward particle drag.

o Develop a burnout setter powder composition and a thermal cycle, which allows liquid migration at the highest possible temperatures so that the liquid viscosity is at its lowest level when removed from the part.

o Optimize powder morphology, powder volume loading, compounding, molding, and burnout to fabricate externally crack-free burned out large cross section part. The part at this stage may contain internal defects.

o Eliminate internal defects by applying compressive stresses on a partially or a fully burned out or a prefired part. This can be achieved by isopressing using a flexible bag such as rubber or a conformal coating. An alternative process would be to use clad hot isostatic pressing.

o Conventional sintering of cold isopressed parts.

This invention for the first time, provides a complete process routing for fabrication of a large cross section injection molded silicon nitride part which is crack free.

Table I shows the detailed process routing which has successfully produced crack free, internal as well as external, turbocharger sized test parts having cross sectional dimension up to 1.9 cm. Since, at the present time, silicon nitride powder is not available in the desired particle sizes, conventionally processed powder $Si_3N_4$ + 6 wt% $Y_3O_3$ + 2 wt% $Al_2O_3$, designated here as AY6, was calcined and remilled to obtain the desired mean particle size.

## TABLE I

### Injection Molding Process Routing For A Large Cross-Section Part.

```
┌─────────────────────────────────────┐
│ AY6 Si₃N₄ Powder, 5-10 micron        │
│ (mean particle size) with 30%        │
│ or less smaller than 1 micron        │
└─────────────────────────────────────┘
                    ↓
        ┌─────────────────────────────┐
        │ High shear compounding      │
        │ with paraffin wax/epoxy     │
        │ binder (34-40 w/o)          │
        └─────────────────────────────┘
                    ↓
            ┌─────────────────────┐
            │ Injection molding   │
            └─────────────────────┘
                    ↓
        ┌─────────────────────────────────────┐
        │         Binder burnout in           │
        │  o  Calcined AY6 setter bed         │
        │     (BET surface area 0.20 m²/g)    │
        │  o  3-6 days thermal cycle to 450°C │
        │  o  N₂ environment                  │
        └─────────────────────────────────────┘
                    ↓
        ┌─────────────────────────────────────┐
        │           Prefired to               │
        │   equal to or less than 1400°C      │
        └─────────────────────────────────────┘
                    ↓
        ┌─────────────────────────────────────┐
Alternative │    Isopressing in a flexible    │
route    ──→│ rubber bag or suitable coating  │
        └─────────────────────────────────────┘
                    ↓
            ┌─────────────────────┐
            │   Bag Removal       │
            └─────────────────────┘
                    ↓
            ┌─────────────────────┐
            │    Sintering        │
            └─────────────────────┘
```

To obtain a ceramic powder such as AY6, having a desired mean particle size of about 2 to about 12 microns, preferably from about 5 to about 10 microns from a conventionally processed ceramic powder having a mean particle size less than one micron, the conventionally processed ceramic powder is calcined followed by comminuting to obtain the desired particle size. In the case of AY6 powder, the calcining temperature was from about 1400°C to about 1800°C followed by milling for about 6 to about 36 hours as illustrated in Table II as powder numbers 2, 3 and 4.

Table II summarizes the surface area, mean and median particle sizes (as measured by x-ray sedigraph) and the weight fraction of less than one micron particles in the powder of the calcined and milled AY6 powders, powder numbers 2, 3 and 4, compared to a control AY6 powder which was not calcined. As Table II indicates, the calcining followed by milling of AY6 powder produces the desired mean particle sizes.

The calcined and milled AY6 ceramic powder is compounded with about 34 vol% to about 42 vol%, preferably from about 37 vol% to about 40 vol% of a wax based binder such as 90 wt% paraffin wax (Astor Chemical 1865Q), 5 wt% of surfactant (Fisher oleic acid A-215), and 5 wt% of epoxy thermosetting material (Acme 5144). The compounding is done in a Bramley two bladed dispersion mixer. The mixing chamber is heated to 80°C. Mixing is continued until the material has a creamy, homogenous appearance.

About 2 hours of mixing time subsequent to the initial blending of the particulate and binder materials is sufficient. At this point a vacuum is applied and the mixing continued approximately 45 minutes to remove any entrapped air. The resulting mixture has rheological properties comparable to a thermoplastic material with a softening range of 40° to 75°C. It can be pelletized or granulated according to well known techniques to a uniform particle size suitable as a feed material for injection molding apparatus.

The molding is accomplished by known injection molding techniques. Injection molding is usually carried out utilizing the transfer method or the direct injection method. In the transfer method a hydraulic press forces the material from a heated storage chamber, by means of a plunger, through sprues or runners, into a mold. In the direct injection method, the heated mixture is forced directly into the mold, through runners and gates, by either a hydraulic plunger or by reciprocating screw equipment. Either method may be utilized. The compounded material was injection molded into turbocharger sized shapes having cross sections up to 1.9 cm utilizing a 30 ton Trubor injection molding machine. Granulated material was loaded into the storage chamber and preheated to the molding temperature. Optimum molding temperature is usually just above the melting point of the binder composition. Where paraffin wax is the major binder component and epoxy is a minor component, the chamber temperature was 70°-72°C. The die was maintained at room temperature (24°C). Molding pressure must be sufficient to force the preheated mixture into all areas of the die. A pressure of 20.68 to 68.95 MPa (3,000 to 10,000 psi) is adequate for these materials, die and molding conditions. The shot was injected into the die cavity and the pressure held for ½ minute. The pressure was released, the die opened, and the parts removed from the die.

The injection molded green turbocharger sized parts were placed in a tray and embedded in a setter powder of calcined AY6 powder having a surface area (BET) of $0.2 m^2/g$.

The binder was removed from the molded parts by heating the embedded parts in a non-oxidizing environment such as nitrogen up to a temperature of 450°C to completely remove the binder. During initial heating at 10°C/hr or greater in which 15 wt% to 20 wt% of the binder was removed the setter powder formed a thick cake around the part. The cake prevented further binder loss until the temperature was sufficiently high, approximately 400°C up to 450°C, to break down the barrier by the thermal decomposition and vaporization of the binder. Thus, the majority of the binder loss occurred after a temperature of 400°C was obtained and up to 450°C. The temperature of 450°C was then raised to 600°C and the heating was continued at 600°C for up to 20 hours in air to remove the residual binder or carbon from the part. For turbocharger sized test parts about 3 days of thermal treatment was sufficient to completely remove the binder. For larger than turbocharger sized cross section parts, a substantially lower heating rate, as low as 1°C/hr may be required or a total thermal treatment of approximately 17 days. The part was then cooled to room temperature. The resulting turbocharger sized part was free of external cracks.

Other low surface area powder stable up to 600°C could behave similar to silicon nitride setter powder and thus may be equally effective for burnout, binder removal, purposes. The use of a calcined and milled powder (as specified in Table II) and a silicon nitride setter powder successfully eliminated external cracks from more than 30 turbocharger sized test parts having cross sections up to 1.9 cm.

## TABLE II

### INJECTION MOLDING SILICON NITRIDE POWDER CHARACTERISTICS

| Powder Number | Processing Condition | BET $(m^2/g)$ | X-ray Sedigraph Particle | | |
|---|---|---|---|---|---|
| | | | Mean Size (micron) | Median Size (micron) | % less than 1 micron |
| 1. | Standard Processed AY6* | 11.06 | 1.78 | .88 | 65.0 |
| 2. | AY6 Calcined. 1400°C for 4h. milling for 6h | 5.00 | 5.61 | 2.06 | 31.0 |
| 3. | AY6 Calcined. 1650°C for 4h. milling for 36h, classified | 4.62 | 5.51 | 3.94 | 19.5 |
| 4. | AY6 Calcined. 1800°C for 15 mins. milling for 36h | 3.36 | 11.54 | 6.34 | 25.0 |

*Data represents average of 5 different powder lots

The binder-free turbocharger sized part was then prefired to a temperature up to 1400°C, cooled to room temperature, and cold isostatically pressed, isopressed, in a flexible rubber bag from pressure of 34.47 up to 344.71 MPa (5000 psi up to 50,000 psi). However, the pressures greater than 344.71 MPa (50,000 psi) can be used. To prevent sticking of the rubber bag to the part a boron nitride lubricating layer can be used. The alternative process is to isopress the binder-free part (which is generally fragile and requires careful handling) without prefiring. However, prefiring is recommended for a complex part because it provides the strength necessary for handling and isopressing. Instead of using rubber bags which may be cumbersome for a complex cross section part (e.g. automotive gas turbine rotor), thin elastomer conformal coatings (e.g. commercially available plastisol, PVA, acrylics, or waxes) having a thickness equal to or greater than 0.20mm could be used. The thin coatings can be applied by various methods such as dipping, spraying, brushing, etc. After the coated part is isostatically pressed and removed from the press, the thin coating is removed prior to the sintering step. The thin coating has been removed successfully by a burn off cycle (to 550°C) as well as removal by peeling. The isopressed part can then be sintered in a conventional manner to provide 99% of theoretical density. Table III gives some examples of crack-free. turbocharger sized samples fabricated via this process routing. Cracks, internal as well as external, could not be eliminated without the use of an appropriate starting material, a proper setter and an isopressing operation.

## TABLE III

Examples of injection molded and sintered turbocharger (cross section up to 1.9 cm) sized test samples.

| Specimen No.* | Prefiring Temp and Time | Isopress | Part Density (MPa) | Comments |
|---|---|---|---|---|
| 46 | – | 34.47 MPa (5000 psi) | 684.02 (99.22 psi) | Visually 10X crack-free. |
| 48 | – | 68.95 MPa (10,000 psi) | 683.95 (99.21 psi) | " |
| 51 | – | 137.9 MPa (20,000 psi) | 685.95 (99.50 psi) | " |
| 52 | 1400°C–4h | 172.4 MPa (25,000 psi) | 682.5 (99.00 psi) | " |
| 45 | 1000°C–4h | 124.1 MPa (18,000 psi) | 684.57 (99.30 psi) | " |

* Starting powder for all these specimens was powder no. 4 of Table II. For binder removal, a calcined silicon nitride setter powder and a 10°C/h heating in $N_2$ to 450°C followed by 20 hour hold at 600°C in air was used.

In the process routing, as shown in Table I, four areas are considered critical for fabrication of large, complex shapes: starting powder, binder removal setter powder, prefiring, and isopressing. The concepts that are used in the present invention are believed to be new and novel. The concept of isopressing a molded part which has binder removed (burnout) (with or without prefiring) can be used to improve the reliability of all ceramics of any shape and size and prepared by methods other than injection molding (e.g. slip casting).

**Claims**

1. A method of fabricating an externally crack-free injection molded ceramic article having a large cross-section which method comprises injection moulding of a blend of ceramic powder and a binder so to form a green body, embedding the said body in a setter powder and decreasing the body through heating, characterized in that it comprises the following steps:

Step 1: compounding a ceramic powder with about 34 to about 42 volume percent of a binder to form a blend, said ceramic powder having a mean particle size from about 2 to about 12 μm;

Step 2: molding the product from step 1 to form a molded ceramic article having a cross section equal to or greater than one cm;

Step 3: embedding the product from step 2 in a setter bed containing a setter powder;

Step 4: forming a binder retarding layer of said setter powder on said molded ceramic article by heating the product of step 3 in a non-oxidizing environment at a heating rate equal to or greater than 1°C per hour to retard the removal of said binder from said molded ceramic article sufficiently to maintain equal to or greater than 80 weight percent of said binder within said molded ceramic article until 400°C is obtained;

Step 5: increasing the temperature from step 4 to 450°C at a heating rate equal to or less than 10°C per hour in a non-oxidizing environment to allow breakdown of the binder retarding layer and binder vaporization;

Step 6: increasing the temperature from step 5 to about 600°C and maintaining the product at that temperature in air for a period sufficient to completely remove said binder from said

7

molded ceramic article; and

Step 7: cooling the product from step 6 to room temperature to obtain an externally crack-free injection molded and binder-free ceramic article having a cross section greater than 1 cm.

2. The method according to claim 1, further comprising:

isopressing the product from step 7 at a pressure equal to or greater than 35.2 MPa (5000 psi); and thereafter sintering the product from said isopressing step at a temperature sufficient to obtain a density greater than 98% of theoretical density.

3. The method according to claim 2 wherein prior to said isopressing step the product of step 7 is heated to a temperature less than or equal to about 1500°C in a nitrogen atmosphere.

4. The method according to any of claims 1 to 3 wherein the ceramic powder of step 1 is obtained by:

calcining a ceramic powder having a mean particle size less than 1 $\mu$m, said calcining being sufficient to increase said mean particle size to greater than 2 $\mu$m; and

comminuting the product from step 1 sufficiently to obtain a ceramic powder having a size from about 2 to about 12 $\mu$m.

5. The method according to any of claims 1 to 4, wherein aid ceramic powder is a silicon nitride powder containing sintering aids.

6. The method according to claim 5 wherein said sintering aids are selected from the group consisting of $Y_2O_3$, $Al_2O_3$, MgO and combinations thereof.

7. The method according to any of claims 1 to 6, wherein said binder is about 37 volume percent to about 40 volume percent of said blend.

8. The method according to any of claims 1 to 7, wherein said mean particle size of said ceramic powder is from about 5 to about 10 $\mu$m.

9. The method according to any of claims 1-8, wherein said cross section of said molded ceramic article is greater than about one cm.

10. The method according to any of claims 1 to 9, wherein said setter powder is a silicon nitride powder containing 6 weight percent $Y_2O_3$ and 2 weight percent $Al_2O_3$ and has a BET of 0,2m$^2$/g.

11. The method according to any of claims 1 to 10, wherein said period sufficient to completely remove said binder from within said molded ceramic article in step 8 is from about 3 to about 17 days.

**Revendications**

1. Procédé de fabrication d'un article de céramique moulé par injection dépourvu de fissure présentant une grande section, le dit procédé comprenant le moulage par injection d'un mélange d'une poudre de céramique et d'un liant de façon à former un corps vert, la mise du dit corps dans une poudre de travail et la réduction du dit corps par chauffage, caractérisé en ce qu'il comprend les étapes suivantes :
   - étape 1: mélanger une poudre de céramique avec entre 34 et 42% en volume environ d'un liant pour former un mélange, les particules de la dite poudre de céramique ayant une taille moyenne comprise entre 2 et 12 $\mu$m environ;
   - étape 2: mouler le produit obtenu à l'étape 1 pour former un article moulé en céramique ayant une section supérieure ou égale à 1 cm;
   - étape 3: mettre le produit obtenu à l'étape 2 dans un lit de travail contenant une poudre de travail;
   - étape 4: former une couche de retard du liant de la dite poudre de travail sur le dit article moulé en céramique par chauffage du produit obtenu à l'étape 3 en milieu non-oxydant à un taux de chauffage supérieur ou égal à 1° C par heure pour retarder la suppression du dit liant du dit article moulé en céramique suffisamment pour maintenir la quantité du dit liant en poids supérieure ou égale à 80 % à l'intérieur du dit article moulé en céramique jusqu'à l'obtention de 400° C;

- étape 5: augmenter la température à partir de l'étape 4 jusqu'à 450° C à un taux de chauffage inférieur ou égal à 10° C par heure en milieu non-oxydant pour permettre une décomposition de la couche de retard du liant et une vaporisation du liant;

- étape 6: augmenter la température à partir de l'étape 5 jusqu'à 600° C environ et maintenir le produit à cette température dans l'air pendant un temps suffisant pour ôter complètement le dit liant du dit article moulé en céramique; et

- étape 7: refroidir le produit obtenu à l'étape 6 jusqu'à température ambiante pour obtenir un article en céramique sans liant et moulé par injection dépourvu de fissure, et présentant une section supérieure à 1 cm.

2. Procédé selon la revendication 1 comprenant, en outre, un iso-pressage du produit obtenu à l'étape 7 à une pression supérieure ou égale à 35.2 MPa, puis un frittage du produit obtenu à l'étape d'iso-pressage à une température suffisante pour obtenir une densité supérieure à 98 % de la densité théorique.

3. Procédé selon la revendication 2 dans lequel, avant la dite étape d'iso-pressage, le produit obtenu à l'étape 7 est chauffé à une température inférieure ou égale à 1500° C environ sous azote.

4. Procédé selon l'une quelconque des revendications 1 à 3 dans lequel la poudre de céramique de l'étape 1 est obtenue par calcination d'une poudre de céramique dont les particules ont une taille moyenne inférieure à 1 $\mu$m, la dite calcination étant suffisante pour augmenter la dite taille moyenne des particules à plus de 2 $\mu$m; et le produit obtenu à l'étape 1 est pulvérisé suffisamment pour que la taille des particules soit comprise entre 2 et 12 $\mu$m environ.

5. Procédé selon l'une quelconque des revendications 1 à 4 dans lequel la dite poudre de céramique est une poudre de nitrure de silicium contenant des aides au frittage.

6. Procédé selon la revendication 5 dans lequel les dits aides au frittage sont choisis dans le groupe comprenant l'$Y_2O_3$, l'alumine, le MgO, et des combinaisons de ceux-ci.

7. Procédé selon l'une quelconque des revendications 1 à 6 dans lequel le dit liant est compris entre 37 et 40 % en volume du dit mélange.

8. Procédé selon l'une quelconque des revendications 1 à 7 dans lequel la taille moyenne des dites particules de la dite poudre de céramique est comprise entre 5 et 10 $\mu$m environ.

9. Procédé selon l'une quelconque des revendications 1 à 8 dans lequel la dite section du dit article moule en céramique est supérieure ou égale à 1 cm environ.

10. Procédé selon l'une quelconque des revendications 1 à 9 dans lequel la dite poudre de travail est une poudre de nitrure de silicium contenant 6% en poids de $Y_2O_3$ et 2 % en poids d'alumine, et présente un BET de 0.2 $m^2$/g.

11. Procédé selon l'une quelconque des revendications 1 à 10 dans lequel le dit temps suffisant pour ôter complètement le dit liant du dit article moule en céramique de l'étape 8 est compris entre 3 et 17 jours.

**Patentansprüche**

1. Verfahren zur Herstellung von äußerlich rißfreien, spritzgegossenen Keramikkörpern mit großem Querschnitt durch Spritzgießen, dieses Verfahren umfaßt das Spritzgießen einer Mischung eines Keramikpulvers und eines Binders, um einen Rohling zu formen, das Einbetten dieses Körpers in ein Einbettpulver und das Kleinerwerden dieses Körpers durch Erhitzen, dadurch **gekennzeichnet,** daß es folgende Schritte umfaßt:

Schritt 1: Vermischen eines Keramikpulvers mit ungefähr 34 bis 42 Vol.-% eines Binders, um eine Mischung zu bilden, wobei dieses Keramikpulver eine mittlere Teilchengröße von etwa 2 bis 12 $\mu$m aufweist;

Schritt 2: Formen des Produktes aus Schritt 1, um einen keramischen Formkörper mit einem Querschnitt von 1 cm oder mehr zu bilden;

Schritt 3: Einbetten des Produktes aus Schritt 2 in ein ein Einbettungspulver enthaltendes Pulverbett;

Schritt 4: Bilden einer Binderverzögerungsschicht aus diesem Einbettungspulver auf diesem keramischen Formkörper durch das Erhitzen des Produktes aus Schritt 3 in einer nichtoxidierenden Atmosphäre bei einer Heizrate von 1 °C/h oder mehr, um die Abscheidung dieses Binders aus diesem keramischen Formkörper ausreichend zu verzögern, so daß der Anteil des Binders in dem keramischen Formkörper, bis 400 °C erreicht werden, 80 Gew.-% oder mehr beträgt;

Schritt 5: Erhöhen der Temperatur aus Schritt 4 auf 450 °C mit einer Heizrate von 10 °C/h oder weniger in einer nichtoxidierenden Atmosphäre, um das Versagen der Binderverzögerungsschicht und das Verdampfen des Binders zu begünstigen;

Schritt 6: Erhöhen der Temperatur aus Schritt 5 auf ungefähr 600 °C und Halten des Produktes auf dieser Temperatur bei Luft für eine Zeitdauer, welche ausreichend ist, diesen Binder vollständig aus diesem keramischen Formkörper zu entfernen; und

Schritt 7: Abkühlen des Produktes aus Schritt 6 auf Raumtemperatur, um einen äußerlich rißfreien, spritzgegossenen und binderfreien Keramikkörper mit einem größeren Querschnitt als 1 cm zu erzielen.

2. Verfahren nach Anspruch 1, des weiteren umfassend:

isostatisches Pressen des Produktes aus Schritt 7 bei einem Druck von 35,2 MPa (5000 psi) oder mehr; und

anschließendes Brennen dieses durch den Schritt des isostatischen Pressens gewonnenen Produktes bei einer Temperatur, welche ausreichend ist, eine höhere Dichte als 98 % der theoretischen Dichte zu erreichen.

3. Verfahren nach Anspruch 2, wobei das Produkt aus Schritt 7 vor diesem Schritt des isostatischen Pressens auf eine Temperatur von ungefähr 1500 °C oder weniger in einer Stickstoffatmosphäre erhitzt wird.

4. Verfahren nach einem der Ansprüche 1 bis 3, wobei das keramische Pulver aus Schritt 1 gewonnen wird durch:

Calcinieren eines keramischen Pulvers mit einer mittleren Teilchengröße von weniger als 1 $\mu$m, wobei dieses Calcinieren ausreichend ist, diese mittlere Teilchengröße auf eine mittlere Teilchengröße von mehr als 2 $\mu$m zu erhöhen; und

ausreichendes Zerkleinern des Produktes aus Schritt 1 ausreichend, um ein Keramikpulver mit einer Größe von 2 bis 12 $\mu$m zu gewinnen.

5. Verfahren nach einem der Ansprüche 1 bis 4, wobei dieses Keramikpulver aus einem ein Sinterhilfsmittel enthaltenden Lithiumnitridpulver besteht.

6. Verfahren nach Anspruch 5, wobei dieses Sinterhilfsmittel aus einer Gruppe, bestehend aus $Y_2O_3$, $Al_2O_3$, MgO und deren Kombinationen, gewählt wird.

7. Verfahren nach einem der Ansprüche 1 bis 6, wobei dieser Binder ungefähr 37 bis 40 Vol.-% dieser Mischung beträgt.

8. Verfahren nach einem der Ansprüche 1 bis 7, wobei diese mittlere Teilchengröße dieses Keramikpulvers ungefähr 5 bis 10 $\mu$m beträgt.

9. Verfahren nach einem der Ansprüche 1 bis 8, wobei dieser Querschnitt dieses keramischen Formkörpers größer als 1 cm ist.

10. Verfahren nach einem der Ansprüche 1 bis 9, wobei dieses Einbettungspulver aus einem 6 Gew.-% $Y_2O_3$ und 2 Gew.-% $Al_2O_3$ enthaltenden Lithiumnitridpulver besteht und eine BET von 0,2 $m^2/g$ aufweist.

11. Verfahren nach einem der Ansprüche 1 bis 10, wobei diese Zeitdauer aus Schritt 8, welche ausreichend ist, diesen Binder vollständig aus diesem keramischen Formkörper zu entfernen, ungefähr 3 bis 17 Tage beträgt.